(19) Europäisches Patentamt
European Patent Office
Office européen des brevets

(11) **EP 2 204 235 A1**

(12) **EUROPEAN PATENT APPLICATION**

(43) Date of publication:
**07.07.2010 Bulletin 2010/27**

(51) Int Cl.:
***B01J 23/44*** *(2006.01)*      ***B01J 23/66*** *(2006.01)*
***B01J 27/224*** *(2006.01)*      ***B01J 37/02*** *(2006.01)*

(21) Application number: **08172302.5**

(22) Date of filing: **19.12.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Total Petrochemicals Research Feluy**
**7181 Seneffe (Feluy) (BE)**

(72) Inventors:
• **Vulpescu, George**
  **7022 Hyon (BE)**
• **Genin, Francine**
  **1400 Nivelles (BE)**
• **Hortmann, Kai**
  **1700 Dilbeek (BE)**
• **Dath, Jean-Pierre**
  **7970 Beloeil Hainault (BE)**

(54) **Catalyst and process for selective hydrogenation of alkynes and dienes**

(57)     Selective hydrogenation process comprising:
• contacting in the presence of hydrogen an hydrocarbon feedstock comprising at least one unsaturated compound selected from the group consisting of alkynes and dienes and mixtures thereof with a first hydrogenation catalyst in a first reaction zone to produce a first product stream having a reduced proportion of alkynes and/or dienes ; and
• contacting the first product stream in a second reaction zone having an inlet and an outlet, in the presence of optional additional hydrogen, with a second hydrogenation catalyst to produce a second product stream,

wherein, the first hydrogenation catalyst comprises :
• a first constituent of at least one metal or metal-based component selected from the elements consisting of Groups 1-10 of the Periodic Table of Elements (new IUPAC notation) and optionally a second constituent of at least one metal or metal-based component selected from the elements consisting of Groups 11-14 of the Periodic Table of Elements, and

said first constituent and optional second constituent are on a carrier made essentially of SiC or of a crystalline silicate.

Hydrogenation catalyst comprising:
• a first constituent of at least one metal or metal-based component selected from the elements consisting of Groups 1-10 of the Periodic Table of Elements (new IUPAC notation) and a second constituent of at least one metal or metal-based component selected from the elements consisting of Groups 11-14 of the Periodic Table of Elements, and
• said first constituent and second constituent are on a carrier made essentially of a crystalline silicate or of SiC,
• the second constituent is optional if the carrier is made essentially of SiC.

EP 2 204 235 A1

**Description**

[Field of the invention]

The present invention relates to a catalyst and a process for selective hydrogenation of alkynes and dienes. The present invention relates to methods for selectively hydrogenating acetylene, methyl acetylene, propadiene, butadienes, and/or butynes in a light olefin-rich feedstream, and more particularly relates, in one embodiment, to methods for selective hydrogenation of acetylene and possibly other unsaturated compounds in an ethylene-rich feedstream with enhanced selectivity to olefins and reduced selectivity to the production of oligomers. The present invention also relates to a catalyst for use in such a process.

[Background of the invention]

Light olefin products (e.g. ethylene, propylene and butylenes) generated by various technologies (e.g. steam cracking, catalytic cracking, methanol to olefins and olefins cracking process) contain highly unsaturated impurities, namely, acetylene, methyl acetylene (MA), propadiene (PD), and butadiene (BD) as by-products. Acetylene, MAPD, and BD must be removed from the light olefins because they are poisons to downstream olefin polymerization catalysts. Currently, selective hydrogenation of acetylene and/or MAPD and/or BD into the respective olefins is the most attractive technology option for olefin manufacturing plants.

For example, in a C2 cut which contains ethylene, acetylene is present as an undesired byproduct. Ethylene is further processed catalytically in large amounts to give polyethylene. Ethylene used for such a polymerization may generally have only an acetylene content of less than about 1 ppm. The same also applies to the C3 stream, which also contains propadiene and propyne in addition to propylene. Propylene, too, is further processed catalytically in a process which is similar to that of ethylene in a large amount to give polypropylene. A propylene which can be used for the polymerization may generally contain only less than about 10 ppm of propadiene and propyne.

In a C4 cut vinyl acetylene, an impurity, is hydrogenated before the butadiene extraction. Alternatively, butadiene can be specifically converted into butene, such a refinement of the C4 stream being desired. In the same way, the C5+ cut contains dienes and other unstable components that generate unwanted products like gums. Therefore these polyunsaturated molecules must be hydrogenated too.

A process for removing said byproducts is the selective hydrogenation of these alkynes and dienes. The impurities are converted in the further processing into components which present no problems (e.g. for polymerization) or are converted in the further processing preferably into the desired product of the hydrocarbon fraction. The main problem in such a process is that, on the one hand, the catalyst used must have sufficient activity to completely hydrogenate the byproducts, which indeed are present only in relatively small amounts compared with the olefin, and thus to force the content of impurities to values which are tolerable in the further processing. When it is considered that in some cases a content of impurities of less than 1 ppm has to be reached, as is the case for ethylene to make polyethylene, it will be clear that the catalyst used in the selective hydrogenation must have a very high activity.

On the other hand, such a catalyst must also have a very high selectivity or, in other words, a low specific activity with respect to the olefin to be further processed, so that this is not hydrogenated or is hydrogenated only to a very small extent even to the corresponding alkane. Furthermore, the catalysts used in the selective hydrogenations should also have the property of not catalyzing the oligomerization of alkynes and dienes. In fact, this reaction results in the formation of oily residues (GO which means "green oils" is a commonly used alternative for these oily residues) which accumulate on the catalyst. Such accumulation generates the deactivation of the catalyst, which can occur even after less than one month, depending on the rate of formation of byproducts.

The prior art contains a large number of references which describe hydrogenation methods and catalyst to purify said olefins.

US 7038097 describes a selective hydrogenation method comprising:

- contacting in the presence of hydrogen a feedstock comprising at least one unsaturated compound selected from the group consisting of acetylene, methyl acetylene, propadiene, 1,2-butadiene, 1,3-butadiene, dimethyl acetylene, ethyl acetylene and mixtures thereof with a low oligomers selectivity first hydrogenation catalyst in a first reaction zone to produce a first product stream; and
- contacting the first product stream in a second reaction zone having an inlet and an outlet, where the second reaction zone is at least partially filled with a second hydrogenation catalyst beginning from the outlet forward to produce a second product stream, where the second hydrogenation catalyst includes a metal selected from the group consisting of palladium, nickel and mixtures thereof wherein, the low oligomers selectivity first hydrogenation catalyst may comprise:

- A first constituent of at least one metal or metal-based component selected from the group of nickel and platinum. In one non-limiting embodiment of the invention, platinum is preferred.
- A second constituent of at least one metal or metal-based component selected from the elements of Groups 1-10 of the Periodic Table of Elements (new IUPAC notation). In one non-limiting embodiment of the invention, preferred second constituents include, but are not necessarily limited to, metals from Groups 8, 9 of the Periodic Table of Elements (new IUPAC notation) and mixtures thereof.
- A third constituent of at least one metal or metal-based component selected from the elements of Groups 11-12 of the Periodic Table of Elements (new IUPAC notation), where the fourth constituent is different from the second constituent. In one non-limiting embodiment of the invention, preferred fourth constituents include, but are not necessarily limited to, Zn, Ag or Au and mixtures thereof.
- A fourth constituent of at least one support and/or binder selected from the group of amorphous inorganic oxides such as clay, alumina, silica, aluminophosphate, titania, magnesia, zirconia, etc., or crystalline inorganic oxides such as zeolites, molecular sieves, pinel, perovskite, etc., or any suitable inorganic solid material such as silicon carbide, silicon nitride, boron nitride, etc.
- Optionally, a fifth constituent of at least one metal or metal-based component selected from the elements of Groups 13-15 of the Periodic Table of Elements (new IUPAC notation), where the fourth constituent is different from the second constituent. In one non-limiting embodiment of the invention, preferred fourth constituents include, but are not necessarily limited to, Ga, In, Sn or Bi and mixtures thereof.
- Optionally, sulfur and/or oxygen.

In the examples the catalyst of the first reaction zone is Pt and Ru on alumina or Pt, Ru and Ag on alumina or Pt, Ru and Ga on alumina. In the examples the catalyst of the second reaction zone is Pd and Ag on alumina or Pd and Ag on magnesium oxide.

US7256153 describes a catalyst particle for the selective hydrogenation of alkynes and dienes in C2-C5$^+$-olefin mixtures, comprising

(a) palladium in an amount of from 0.005 to 1% by weight based on the total mass, and
(b) silver in an amount of from 0.005 to 1 % by weight based on the total mass,

with (a) and (b) being applied to a silica support, silver being distributed homogeneously over the catalyst particle and palladium being present in an edge layer close to the surface of the catalyst particle.

WO 2006 023142 describes a catalyst for selective hydrogenation of acetylene comprising a low surface area carrier, with a surface area lower than 20 m2/g, preferably from 2 m2/g to 20 m2/g, more preferably 2 m2/g to 10 m2/g, and most preferably 3 m2/g to 5 m2/g; palladium; and a Group IB metal, preferably silver, wherein the pore volume of the carrier is greater than 0.4 cc/g, preferably greater than Q. 4 5 cc/g and more preferably greater than 0 5 cc/g, wherein at least 90 percent, preferably at least 95%, and most preferably at least 98%, of the pore volume of the pores is contained in pores with pore diameters greater than 500 Angstroms, and wherein from 1 to 2 percent of the pore volume is contained in pores with a pore diameter from 500 to 1,000 Angstroms. The carrier is selected from the group consisting of alumina, silica-alumina, zinc oxide, nickel spinel, titania, zirconia, ceria, chromia-alumina, magnesium oxide, cerium oxide and mixtures thereof, preferably alumina. In the examples the carrier is alumina.

WO 2006009988 describes a catalyst for selective hydrogenation of acetylene and dienes in a light olefin feedstream, comprising:

- a first component selected from the group consisting of copper, gold, silver, and mixtures thereof;
- a second component selected from the group consisting of nickel, platinum, palladium, iron, cobalt, ruthenium, rhodium, and mixtures thereof;
- an inorganic support; and
- at least one inorganic salt or oxide selected from the group consisting of zirconium, a lanthanide, an alkaline earth, and mixtures thereof.

The carrier is silica or alumina.

WO20060789 describes a catalyst for the selective hydrogenation of acetylene comprising iridium ("Ir") and palladium ("Pd") and a promoter ("M") on an inorganic carrier, wherein said promoter is selected from the group consisting of silver, gold, copper, zinc, tin and combinations thereof, and wherein said inorganic carrier is selected from the group consisting of alumina, silica, silica-alumina, activated carbon, ceria, zirconia, chromia-alumina, titania, magnesium oxide, metal aluminates, calcium aluminate, magnesium aluminate, barium hexaluminate, nickel aluminate and mixtures thereof. The carrier may be any carrier generally known in the art for use in hydrogenation catalysts. For example, the carrier may be metal aluminates, such as calcium aluminate, magnesium aluminate, barium hexaluminate, nickel aluminate, and alumina, silica, silica-alumina, activated carbon, ceria, zirconia, chromia-alurnina, titania, magnesium oxide, and mixtures thereof. In an exemplary embodiment, without limitation, the carrier is an alumina having a surface area of from about 30 m2/g to about 50 m2/g. In an alternative embodiment, the carrier is an alpha-alumina.

US2002068843 describes a selective hydrogenation catalyst for selectively hydrogenating unsaturated hydrocarbon, which comprises mainly the following active components loaded on a porous inorganic carrier:

(1) at least one of Pt, Pd, Ni, Ru, Co, and Rh;
(2) at least one of Ag, Cu, Zn, K, Na, Mg, Ca, Be, Sn, Pb, Sr, Ba, Ra, Fe, Mn, Zr, Mo, and Ge;
(3) at least one of rare earth metals; and
(4) Bi;

wherein the rare earth metal is selected from Sc, Y and Lanthanides in Group IIIB of periodic table of elements.

The porous inorganic carrier of the invention can be the well-known carrier in the prior art. For example, diatomaceous earth, spinel, $SiO_2$, $TiO_2$ $Al_2O_3$, or mixtures thereof The preferred carrier of the invention is $Al_2O_3$ or $SiO_2$; Its shape can be granular, gear-shaped, spherical, lamninar or strip, preferably gear-shaped or spherical, more preferably gear-shaped (such a shape has an advantage of low bed pressure drop at high space velocity); its specific surface area is 1-200 $m^2$/g, preferably 2-120 $m^2$/g, more preferably 2-50 $m^2$/g. In the examples the metals (1) and (2) are Pd and Ag, the carrier is alumina.

It has now been discovered in the present invention that catalysts having a carrier made essentially of a crystalline silicate or of SiC (silicon carbide) lead to a more efficient hydrogenation and more particularly a significant reduction of the GO formation and thereby significantly reduce the catalyst deactivation under the operating conditions. In a specific embodiment the catalyst comprises Pd and Ag on the said carrier. The present invention relates to a novel catalytic process using two separated reaction zones that is capable of delivering selective hydrogenation performance with high ethylene-and/or propylene-and/or butene-gain selectivity and low selectivity to green oil (oligomers) and saturates. Additional benefits of the inventive process include, but are not necessarily limited to, the extension of the lifetimes of the catalysts and/or the extension of the operation cycle due to the reduction of green oil.

The following prior arts have already disclosed catalysts having carrier made essentially of a crystalline silicate or of SiC but operating as hydrogenation catalysts in conditions very different from the present invention or not operating as hydrogenation catalysts.

WO 03008519 describes a process for hydrogenating unsaturations in petrochemical feedstocks, the process comprising contacting the petrochemical feedstock, including at least one component having unsaturations, and hydrogen with a catalyst comprising at least one Group Ia, Ib, IIb, VIb, VIIb or VIII metal on a support of a crystalline calcium silicate having a surface area of at least 30 m2/g, the support being in the form of substantially spherical particles having a mean diameter of from 10 to 200 microns and pores in the particles having a diameter of from 100 to 2000 Angstroms, at a temperature of from 0 to 550°C and a pressure of from 3 to 150 barg. The above prior art also relates to a process for hydrogenating unsaturations in petrochemical feedstocks, the process comprising contacting the petrochemical feedstock, including at least one component having unsaturations, and hydrogen with a catalyst comprising at least one Group Ia, Ib, IIb, VIb, VIIb or VIII metal on a support of a crystalline calcium silicate having the chemical composition $Ca_6Si_6O_{17}(OH)_2$.

In the examples the catalyst is Pd on xonotlite, a specific crystalline calcium silicate, for hydrogenation of pyrolysis gasoline. The selective hydrogenation of pyrolysis gasoline is also known in the art as "first stage" hydrogenation of the pyrolysis gasoline. The feedstock comprises pyrolysis gasoline from steam cracking units, coker units or visbreakers, then diolefins and unsaturated aromatics are converted into the corresponding olefins and aromatics. The hydrogenated product can be used as a stable gasoline blending feed or can be further hydrotreated for the recovery of aromatics.

Because the metal is restricted to at least one Group la, Ib, IIb, VIb, VIIb or VIII, it doesn't disclose a combination of Pd and Ag on crystalline calcium silicate. It doesn't disclose a Pd or a combination of Pd and Ag on SiC. Various feedstocks to be hydrogenated are described but a stream of ethylene contaminated by acetylene is not described.

US 2005-159292 relates to catalytic filters comprising a silicon carbide ("SiC") foam and an active phase comprising at least one metallic element, processes for preparing the catalytic filters and methods for purification of exhaust gases from internal combustion engines, particularly diesel engines, using the catalytic filters. In one preferred embodiment of said prior art, the SiC foam is impregnated with a chemical substance(s) that acts as a catalyst or that is a precursor of such agents, particularly as oxidation catalyst to catalyze the combustion of soot particles passing through the device. The oxidant source is either oxygen or NO or $NO_x$ contained in the exhaust gases to be purified. For example, according to known techniques, β-SiC foam can be impregnated with a solution containing one or several compounds to form a catalytically active phase. The compounds preferably are selected from the group consisting of platinum, rhodium, palladium or linear combinations or alloys of the metals. The presence of at least one of these metals lowers the soot combustion temperature and enables continuous combustion, thus preventing the accumulation of dirt in the device. It has nothing to see with a selective hydrogenation.

US 2006-153765 relates to the field of β-SiC based catalysts for heterogeneous catalysis and particularly two-phase impregnation of supports with a large specific surface area with active phase precursors to form such a catalyst.

The first subject matter of this prior art is a process for impregnation of a β-SiC support with a specific surface area, determined by the BET nitrogen adsorption method at the temperature of liquid nitrogen according to standard NF X 11-621, equal to at least 1 $m^2/g$ and comprising macropores with a size between 0.05 and 10 $\mu$m, and optionally also mesopores with a size between 4 and 40 nm, the said process comprising at least the following steps:

(a) a first impregnation step during which the said support is impregnated at least once by a polar agent A,
(b) a second impregnation step during which the said support is impregnated at least once by an agent B less polar than agent A,

and in which process at least one agent B among the said agents A and B comprises at least one active phase precursor.

The active phase precursor, preferably a metallic compound, may be selected from the group composed of the Fe, Ni, Co, Cu, Pt, Pd, Rh, Ru and Ir elements. The said precursor may advantageously be chosen among organo-metallic compounds and salts of the said elements.

The catalyst according to said prior art may be used in various fields, such as the chemical or petrochemical industry. For example, it can catalyse the oxidation of methane or oxidation of carbon monoxide. It can also be used in exhaust gas depollution reactions for internal combustion engines (particularly engines running on liquid fuel such as gasoline or diesel), for which it improves the efficiency due to very short contact time and very good access of reagents to active sites of the catalyst. It has nothing to see with a selective hydrogenation.

[Brief summary of the invention]

- The present invention is a selective hydrogenation process comprising:

  contacting in the presence of hydrogen an hydrocarbon feedstock comprising at least one unsaturated compound selected from the group consisting of alkynes and dienes and mixtures thereof with a first hydrogenation catalyst in a first reaction zone to produce a first product stream having a reduced proportion of alkynes and/or dienes ;

- and
  contacting the first product stream in a second reaction zone having an inlet and an outlet, in the presence of optional additional hydrogen, with a second hydrogenation catalyst to produce a second product stream, wherein, the first hydrogenation catalyst comprises :
- a first constituent of at least one metal or metal-based component selected from the elements consisting of Groups 1-10 of the Periodic Table of Elements (new IUPAC notation) and optionally a second constituent of at least one metal or metal-based component selected from the elements consisting of Groups 11-14 of the Periodic Table of Elements, and
- said first constituent and optional second constituent are on a carrier made essentially of SiC or of a crystalline silicate.

Among the SiC, the Beta-SiC is preferred.

Advantageously in the second reaction zone the contact of the first product stream, in the presence of optional additional hydrogen, with the second hydrogenation catalyst is made at conditions effective to produce a second product stream essentially free of the said alkynes and dienes.

The molar ratio of hydrogen to the at least one component having unsaturations to be selectively hydrogenated may be from 0.1 to 1000 and advantageously from 0.7 to 200.

In one embodiment the first constituent is Pd and the second constituent is Ag.

In one embodiment the second hydrogenation catalyst is any catalyst capable to hydrogenate at least a part of the alkynes and dienes not hydrogenated in the first reaction zone.

In one embodiment the first and the second hydrogenation catalysts are the same. In another embodiment the first and the second hydrogenation catalysts are made with the same metals but percentage of the metals are different in the first catalyst and in the second catalyst. In another embodiment the carrier of the first catalyst is SiC and the carrier of the second catalyst is a crystalline silicate or vice versa. In another embodiment the carrier of the first and the second catalyst is e.g. a crystalline silicate but the carrier of the first catalyst has not the same features, such as specific area and/or porosity, size etc .. , as the carrier of the second catalyst. In another embodiment the differences between the first and the second catalyst are a combination of one or more of the above features.

In one embodiment of the invention, the first and the second reaction zones can be located in one reactor, wherein the first and the second hydrogenation catalysts are packed in a stacked-bed manner. In another embodiment of the invention, a reactor-in-series can be used, wherein the first and the second reaction zones can be located in a series of separate reactors. In yet another embodiment of the invention, the first reaction and the second reaction zones can employ a series of separate reactors wherein one of the reaction zones occupies at least one reactor and one of the reactors would be a stacked-bed reactor.

In one embodiment wherein the first and the second reaction zones are located in a series of separate reactors, the front portion of the second reaction zone (on the inlet side of said second reaction zone) contains the same catalyst used in the first reactor and of course the back portion of the second reaction zone (on the outlet side of said second reaction zone) contains the second hydrogenation catalyst.

The present invention also relates to hydrogenation catalysts.

The present invention provides an hydrogenation catalyst comprising :

- a first constituent of at least one metal or metal-based component selected from the elements consisting of Groups 1-10 of the Periodic Table of Elements (new IUPAC notation) and a second constituent of at least one metal or metal-based component selected from the elements consisting of Groups 11-14 of the Periodic Table of Elements, and
- said first constituent and second constituent are on a carrier made essentially of a crystalline silicate.

The present invention further provides an hydrogenation catalyst comprising :

- a first constituent of at least one metal or metal-based component selected from the elements consisting of Groups 1-10 of the Periodic Table of Elements (new IUPAC notation) and optionally a second constituent of at least one metal or metal-based component selected from the elements consisting of Groups 11-14 of the Periodic Table of Elements, and
- said first constituent and optional second constituent are on a carrier made essentially of SiC.

The above catalysts can be formulated with a binder.

[Detailed description of the invention]

The process of the invention can advantageously be used in selective hydrogenations of alkynes and dienes in hydrocarbon feedstocks. This process is of high interest for the hydrocarbon feedstocks comprising one or more olefins (e.g. olefin mixtures). The olefin can be a C2-C5+ olefin, preferably a C2-C5 olefin, or a mixture of two or more C2-C5+ olefins, preferably a mixture of two or more C2-C5 olefins. In connection with the present invention, olefin mixtures are preferably understood as meaning hydrocarbon streams, i.e. the products which are obtained on cracking mineral oil distillates or natural gas and which largely contain olefins. The novel process can however also be used for the selective hydrogenation of alkynes and dienes in olefin mixtures which were obtained in other processes known to those skilled in the art.

It will be appreciated, however, that while the invention is often discussed in terms of selectively hydrogenating acetylene, MA, PD, or BD in a stream that is predominantly ethylene, propylene, or butylene, that the invention is not limited to the treatment of streams that contain ethylene, propylene, or butylene but is expected to find applicability to the selective hydrogenation of these compounds in streams of other chemical content as well.

In one embodiment the unsaturated compound is selected from the group consisting of acetylene, methyl acetylene, propadiene, 1,2-butadiene, 1,3-butadiene, dimethyl acetylene, ethyl acetylene, vinylacetylene and mixtures thereof.

Examples of hydrogenation processes in which the process and catalysts of the present invention can be used are mentioned below:

Selective hydrogenation of acetylene in C2 streams;
Selective hydrogenation of propyne and/or propadiene in C3 streams;
Selective hydrogenation of 1-butyne, 2-butyne, 1,2-butadiene and/or vinylacetylene in C4 streams to give 1,3-butadiene, 1-butene, cis-and/or trans-2-butene;
Selective hydrogenation of 1-butyne, 2-butyne, 1,2-butadiene, 1,3-butadiene and/or vinylacetylene in C4 streams to give 1-butene, cis-and/or trans-2-butene in the case of butadiene-rich C4 streams (crude C4 cut) or low-butadiene C4 streams (raffinate I);
Selective hydrogenation of unsaturated compounds and/or unsaturated substituents of aromatic compounds in C5$^+$ streams.

Selective hydrogenation of acetylene in C2 streams to give ethylene, is usually carried out with a GHSV (gas hourly space velocity) of from 500 to 10000 h-1, at from 0 to 250°C and from 0.01 to 50 bar.

Selective hydrogenation of propyne and/or propadiene in C3 streams to give propylene, is usually carried out with a GHSV of from 500 to 10000 h-1 or as a gas/liquid-phase process with a LHSV (liquid hourly space velocity) of the liquid C3 stream of from 1 to 50 h-1 at from 0 to 180°C and from 0.01 to 50 bar.

Selective hydrogenation of 1-butyne, 2-butyne, 1,2-butadiene and/or vinylacetylene in C4 streams to give 1,3-butadiene, 1-butene, cis-and/or trans-2-butene. It is usually carried out as a gas/liquid-phase process with LHSV of the liquid C4 stream of from 1 to 50 h-1, at from 0 to 180°C and from 2 to 50 bar. Said process can be used, for example, as a selective front-end vinylacetylene hydrogenation before a butadiene extraction.

Selective hydrogenation of 1-butyne, 2-butyne, 1,2-butadiene, 1,3-butadiene and/or vinylacetylene in C4 streams to give 1-butene, cis-and/or trans-2-butene in the case of butadiene-rich C4 streams (crude C4 cut) or low-butadiene C4 streams (raffinate I). It is usually carried out as a gas/liquid-phase process with a LHSV of the C4 liquid stream of from 0.1 to 60, preferably from 1 to 50 h-1, at a reactor inlet temperature of from 20 to 90°C, preferably from 20 to 70°C and from 5 to 50, preferably from 10 to 30 bar. For example, the butadiene content, which in typical C4 streams from steam crackers is from 20 to 80% by weight, based on the total stream, is reduced in the first reaction zone to a content of from 0.1 to 20% by weight and in the second reaction zone to the desired residual content of from a few ppm by weight to about 1% by weight. Isobutene is retained essentially unchanged and can be separated from the C4 stream by known methods before or after hydrogenation. Said process can be used, for example, as a butadiene hydrogenation in the C4 stream (if butadiene is not to be recovered as the desired product) or as a selective tail-end vinylacetylene hydrogenation after the butadiene extraction from the C4 stream.

Selective hydrogenation of unsaturated compounds and/or unsaturated substituents of aromatic compounds in C5$^+$ streams to give more highly saturated compounds and/or aromatic compounds with more highly saturated substituents. It can carried out as a gas/liquid-phase process with a LHSV of the liquid C5+ stream of from 0.5 to 30 h-1, at from 0 to 180°C and from 2 to 50 bar. This process can be used, for example, for the selective hydrogenation of pyrolysis gasoline, for the selective hydrogenation of olefins in reformate streams or coke furnace condensates and for the hydrogenation of styrene to ethylbenzene or of phenylacetylene to styrene.

In one embodiment the process of the invention includes a catalyst in a first reaction zone, which converts at least 50% of the acetylene content of an ethylene-rich feedstock entering it. This catalyst is characterized by its low selectivity toward producing green oil and/or saturates. A second catalyst in second reaction zone converts almost 100% of the acetylene content of the ethylene-rich first product stream leaving the first reaction zone. This second catalyst is characterized by its high activity in acetylene selective hydrogenation.

In one embodiment of the invention, and only for the purposes of illustration, the feedstock to the first reaction zone may contain about 2% or up to 5% (mole %) acetylene, about 70% ethylene, and the balance mostly ethane. Such a stream is representative of a tail-end acetylene converter design. The first product stream from in this non-limiting illustration would thus have less than 1% acetylene, about 70-71% ethylene and the balance mostly ethane.

In another non-limiting embodiment of the invention, and only for the purposes of illustration, the feedstock to the first reaction zone may contain about 0.5% (mole %) acetylene, about 30% ethylene, and the balance consisting of other compounds including ethane. Such a stream is representative of a front-end acetylene converter design. The first product stream in this non-limiting illustration would thus have less than 0.2% acetylene, more than about 30% ethylene and the balance other compounds including ethane. Depending upon the process configuration of the plant, this feed stream can also contain C3 components such as methyl acetylene, propadiene, propylene, and propane. Still heavier components such as 1,3 butadiene, 1,2 butadiene, ethyl acetylene, dimethyl acetylene, vinyl acetylene, cyclopentadiene, benzene, toluene may also be present as a result of certain process configurations.

In another one non-limiting embodiment of the invention, and only for the purposes of illustration, the feedstock to the first reaction zone may contain at least 80% (mole %) propylene, less than 10% methyl acetylene and propadiene, and the balance mostly propane. Such a stream is representative of a methyl acetylene-propadiene (MAPD) converter design. The first product stream in this non-limiting illustration would thus have less than 1% methyl acetylene and less than 1% propadiene, about 80-95% propylene and the balance mostly propane.

In another non-limiting embodiment of the invention, and only for the purposes of illustration, the feedstock to the first reaction zone may contain at least 90% (mole %) butylene, greater than 0.2% butadiene, and the balance mostly butanes. Such a stream is representative of a butadiene (BD) converter design. The first product stream in this non-limiting illustration would thus have less than 1% butadiene, about 90-95% butylene and the balance mostly butane.

**As regards the selective hydrogenation of an ethylene rich stream and the first reaction zone,** the temperature may range from about 10°C to about 150°C, advantageously from about 20 to 100°C. The GHSV may range from about 1000 to about 20000 h-1, advantageously from about 3000 to 7000 h-1. The pressure may range from about 1 barg (bar gauge) to about 100 barg, advantageously from about 2 barg to about 30 barg. The molar ratio H2/C2H2 may range from 0.5 to 20, advantageously from 1 to 1.5 and preferably from 1 to 1.4.

**As regards the selective hydrogenation of an ethylene rich stream and the second reaction zone,** the temperature may range from about 10°C to about 150°C, advantageously from about 20 to 100°C. The GHSV may range from about 1000 to about 20000 h-1, advantageously from about 3000 to 7000 h-1. The pressure may range from about 1 barg (bar gauge) to about 100 barg, advantageously from about 2 barg to about 30 barg. The molar ratio H2/C2H2 may range from 0.5 to 20, advantageously from 1.4 to 1.8.

**As regards a guard bed** to remove acetylene or MAPD from ppm level to ppb level prior to a polymerization of ethylene or propylene the catalyst of the present invention can be used. The temperature may range from about 10°C to about 150°C, advantageously from about 20 to 100°C. The GHSV may range from about 1000 to about 20000 h-1, advantageously from about 3000 to 7000 h-1. The pressure may range from about 1 barg (bar gauge) to about 100 barg, advantageously from about 2 barg to about 30 barg. The molar ratio H2/C2H2 or H2/MAPD may range from 1 to 200. Of course in such conditions of high H2 ratio the hydrogenation is not selective.

**As regards the crystalline silicate carrier,** the preferred carrier is a basic calcium silicate with a very open and accessible pore structure. In one embodiment the preferred calcium silicate is xonotlite, tobermorite, afwillite, foshagite, okenite, wollastonite.

A most preferred carrier comprises a synthetic crystalline hydrated calcium silicate having a chemical composition of $Ca_6 Si_6 O_{17} (OH)_2$ which corresponds to the known mineral xonotlite (having a molecular formula $6CaO.6SiO_2.H_2O$).

In one embodiment the carrier is a crystalline calcium silicate having a surface area of at least 30 $m^2/g$, the support being in the form of substantially spherical particles and pores in the particles having a diameter of from 100 to 2000 Angstroms. Advantageously the substantially spherical particles have a mean diameter of from 10 to 200 microns.

The carrier preferably has a spherical morphology with a mean diameter of the spherical particles being from 10 to 200 $\mu$m. The carrier has a very open structure comprising an outer shell with a very close-crystal structure surrounding an open inner structure. This may be referred to as an egg shell like structure. The outer shell is formed of interlocked ribbon-shaped crystals yielding regular and homogeneous surface properties. The outer shell is provided with pore openings up to 2000 Angstroms, more preferably from 100 to 1000 Angstroms, in diameter. This provides a good pore structure with high pore volume. Preferably, the carrier has a specific surface area well above 10$m^2/g$, ranging from 30 to 200$m^2/g$, more preferably from 40 to 90$m^2/g$.

The carrier material is preferably pH basic. More preferably, the carrier material has a minimum basicity corresponding to a pH of greater than 7.5. The pH may be measured when 4 wt% of the support material is immersed in water.

Generally, a synthetic hydrated calcium silicate is synthesised hydrothermally under autogeneous pressure. An advantageous synthetic hydrated calcium silicate is available in commerce from the company Promat of Ratingen in Germany under the trade name Promaxon. This material exhibits some basicity due to the presence of calcium, and in a 4% by weight dispersion in water, the pH reaches a value of around 10.

**As regards the SiC carrier,** it is known per se. US 200159292 describes a β-SiC foam part with a specific surface area equal to at least 5 $m^2/g$ and with at least two zones A and B with a different porosity distribution, **characterized in that** the part is made by chemical transformation of a porous precursor medium composed of at least two blocks A' and B' with a different porosity distribution, and in that the at least two zones A and B are derived from the said chemical transformation of the said at least two blocks A' and B'. In yet further accordance with US 200159292, there are two manufacturing processes used to make such a β-SiC foam part with a specific surface area equal to at least 5 $m^2/g$ and with at least two zones A and B with a different porosity distribution. The first step in these two processes (A) and (B) is to prepare a precursor medium made of a carbonizable foam with an open cellular structure (such as a polyurethane foam) comprising at least two zones with a different porosity distribution, that is impregnated with a hardening resin, and preferably a thermosetting resin, that in process (B) is in the form of a silicon powder suspension in a hardening resin, and preferably a thermosetting resin. The resin is then cross-linked, in the case of thermosetting resins by gradually increasing the temperature. The remainder of the process is then different for processes (A) and (B). The next step in process (A) is to pyrolyze the foam to form a carbon foam, activate the carbon foam by heating it while under a $CO_2$ draft to a temperature ranging from 700° C. to 1000°C, and exposing the activated carbon foam to an SiO vapour to form a silicon carbide foam. In process (B), the carbonizable foam with an open cellular structure and the resin are carbonized, and the carbon thus formed is silicided by progressively increasing the temperature up to a temperature not exceeding 1600°C. In both processes (A) and (B), the residual carbon can be eliminated by oxidation of the product at a temperature ranging from 650°C to 950°C.

US2006-153765 describes catalysts made on a β-SiC carrier with two distinct surface functions (hydrophobic and hydrophilic). Any β-SiC catalyst carrier with these two functions can be suitable, provided that its porosity and its specific surface area determined by the BET nitrogen and adsorption method are sufficient, in other words at least 1 $m^2/g$ and preferably at least 2 $m^2$ /g. Advantageously, the carrier has a specific surface area of between 1 and 100 $m^2/g$. Carriers with a specific surface area of more than 10 $m^2/g$ are preferred, and more than 20 $m^2/g$ is even better. This specific surface area is due to the presence of pores. A distinction is made between three types of pores: micropores with an average size typically smaller than 4 nm, mesopores with a size typically between 4 and 50 nm, and macropores that can form networks for which the typical diameter is more than 50 nm. In the context of this invention, carriers for which the total porosity measured by nitrogen adsorption is essentially composed of mesopores between 4 and 40 nm and a macroporous system with an average diameter of between 0.05 and 100 $\mu$m are preferred, and values of 0.05 and 10 $\mu$m are better, and 0.05 and 1 $\mu$m are even better. The distribution of pores by size is demonstrated by penetration of mercury. The pores may also be observed directly by scanning electron microscopy. Advantageously, the distribution of macropores by size is between 0.06 and 0.4 $\mu$m, and even preferably is between 0.06 and 0.2 $\mu$m. In one preferred embodiment of this invention, a $\beta$-SiC silicon carbide is used in the form of extruded materials or balls prepared using any of the synthesis techniques described in patent applications EP 0 313 480 A, EP 0 440 569 A, EP 0511 919 A, EP 0 543 751 A and EP 543 752 A.

US7393877 describes beta-SiC prepared by a gas/solid reaction between intimately mixed (without liquid) SiO vapour and solid carbon. For further details with regard to the $\beta$-SiC, reference may be made to the following patent applications and patents, incorporated by reference in the present application: EP-A-0 313 480, EP-A-0 440 569, U.S. Pat. No. 5,217,930, EP-A-0 511 919, EP-A-0 543 751 and EP-A-0 543 752. The crystals are of face-centred cubic type. In general, the specific surface of the $\beta$-SiC is between 5 and 40 m$^2$/g and preferably between 10 and 25 m$^2$/g. The $\beta$-SiC can be prepared in the form of a powder, grains, extrudates (without binder), foam, monolith, and the like. The size of the SiC can vary according to the type of process employed (fixed bed, ebullating bed, slurry bed). It is thus possible, according to one alternative form, to use a size of between 0.1 and 20 mm, preferably between 1 and 15 mm. According to another alternative form, it is possible to use a size of between 1 and 200 $\mu$m, preferably between 5 and 150 $\mu$m. This $\beta$-SiC has very good mechanical properties. Because of its very good thermal conductivity, generally much greater than that of metal oxides, hot spots are limited to the surface of the catalyst. The selectivity is thus improved.

US 6217841 describes a process to make SiC which consists of the combination of the following successive stages:

optionally, preparing carbon foam by calcining a foam of an organic polymer,
producing, from the thus prepared carbon foam or a commercially available carbon foam, a part having the dimensions and shape of the catalyst support or catalyst which it is wished to obtain,
preferably, degassing the carbon foam part in vacuo or under the scavenging of an inert gas, such as argon, activating the surface of said part by exposing it to an oxidation in carbon dioxide CO2,
exposing the thus activated part to the action of a volatile compound of the metal, whose carbide is to be prepared at a temperature (1000°C to 1400°C) and for a time (2 to 6 hours) such that the metal content of the compound is reduced and the metal is carburized. This stage is performed either in vacuo, or under inert gas scavenging at atmospheric pressure.

Other SiC carriers are described in US 5217930, the content of which is incorporated in the present invention.

**As regards the metal part of the catalysts,** and the first constituent of at least one metal or metal-based component selected from the elements consisting of Groups 1-10 of the Periodic Table of Elements (new IUPAC notation). The metal is advantageously selected in the group consisting of Pd, Pt, Ni, Rh, Fe, Co and Ir. Preferably the metal is Pd. As regards the second constituent of at least one metal or metal-based component selected from the elements consisting of Groups 11-14 of the Periodic Table of Elements it is advantageously selected in the group consisting of Ag, Zn, Au, Ga and Ge.

The at least one metal or metal-based component selected from the elements consisting of Groups 1-10 of the Periodic Table of Elements is present in an amount of from 0.01 to 10 wt%, more preferably from 0.01 to about 0.1 wt%, based on the weight of the overall catalyst which is the sum of the carrier, the metals and the optional binder. In a specific embodiment the at least one metal or metal-based component selected from the elements consisting of Groups 1-10 of the Periodic Table of Elements is present in an amount of from 0.01 to 10 wt%, preferably from 0.01 to about 1 wt%, more preferably from 0.01 to about 0.7 wt%, based on the weight of the overall catalyst which is the sum of the carrier, the metals and the optional binder. This specific embodiment may concern e.g. hydrogenation of C3 cuts in liquid phase.

The at least one metal or metal-based component selected from the elements consisting of Groups 11-14 of the Periodic Table of Elements is present in an amount of from 0.01 to 10 wt%, preferably from 0.01 to about 1 wt%, more preferably from 0.1 to about 0.5 wt%, based on the weight of the overall catalyst which is the sum of the carrier, the metals and the optional binder.

The carrier can be impregnated by the at least one metal or metal-based component selected from the elements consisting of Groups 1-10 of the Periodic Table of Elements and by the at least one metal or metal-based component selected from the elements consisting of Groups 11-14 of the Periodic Table of Elements in any order.

The catalyst is produced by impregnating the carrier with the metals or metal-based components or precursors of said metals or metal-based components. Hereunder is described the impregnating of the crystalline silicate. Preferably, an incipient wetness impregnation technique is employed where the pores of the support are filled with a volume of solution containing the metal. In this technique, the dried catalyst is impregnated with a solution of a salt of the metal or metal-based component. The amount of the metal or metal-based salt is calculated to provide a desired metal content on the support, for example a metal content of from 0.01 to 10 wt% based on the weight of the overall catalyst, most preferably about 0.5 wt% based on the weight of the overall catalyst. The impregnated solid is dried first under vacuum and subsequently at elevated temperature. Finally, the product is calcined, for example at a temperature of about 250°C for a period of about 3 hours.

Alternatively an excess of solution is used during the impregnation step and the solvent is removed by evaporation. Depending on the properties of the impregnation solution and the carrier the active metal phase can have different locations: (1) the metal or metal compound is concentrated in a thin layer close to the external surface, this may be referred to as an "egg-shell mode", (2) the metal or metal compound is concentrated in a thin layer below the surface, but not penetrating to the centre, this may be referred to as an "egg-white mode", (3) the metal or metal compound is concentrated in a small zone near the centre of the particle carrier, this may be referred to as an "egg-yolk mode", and (4) the metal or metal compound is uniformly distributed throughout the particle carrier. The way that the metal precursor will interact with the carrier depends on the isoelectric point (IEP) which is the pH at which the particle of the carrier in an aqueous solution has no net charge. At pH's above the IEP, cations will be adsorbed, because the surface carries a negative charge; below the IEP, only anions will be adsorbed, because the surface carries a positive charge. During the contact of the impregnating solution and the carrier, ion exchange can also occur. The impregnating solution may be altered by adding complexing agents, which can change the charge of the metal precursor. In another technique, competing ions may be added to improve the spreading of the metal precursor over the carrier. In alternative embodiments of the catalyst production process, the metal (or metals) may be deposited on the support by ion exchange or vapour phase deposition. The impregnation of the SiC carrier is similar to the above technique relating to the crystalline silicate. Similarly the metal (or metals) may be deposited on the support by ion exchange or vapour phase deposition.

**As regards an optional binder,** the above catalysts comprising one or more or metal-based component on the crystalline silicate or SiC as a carrier can be used as itself or formulated with a binder. Once formulated, it is referred as "finished catalyst" or "formulated catalyst" or "overall catalyst". Said binder provides additional hardness or catalytic activity to the finished catalyst. These binders include compositions such as kaolin and other clays, various forms of rare earth metals, alumina or alumina sol, titania, zirconia, quartz, silica or silica sol, and mixtures thereof. These components are effective in densifying the catalyst and increasing the strength of the formulated catalyst. The amount of the carrier (SiC or crystalline silicate)+ the metal, which is contained in the formulated catalyst ranges from 10 to 90 weight percent of the formulated catalyst, preferably 20 to 70 weight percent of the formulated catalyst. In other words the amount of the carrier (SiC or crystalline silicate)+ the metal ranges from 10 to 90 parts for respectively 90 to 10 parts of the binder and preferably ranges from 20 to 70 parts for respectively 80 to 30 parts of the binder. Alternatively the catalyst can be formulated before the impregnation of the metal (or metal-based component). When two metals are involved they can be added in any order or together on the carrier or on the carrier+the binder. Alternatively when two metals are involved, the carrier can be impregnated with one of the metals, then formulated with the binder and finally the other metal is brought by impregnation or equivalent means. By way of example the formulated catalyst (first hydrogenation catalyst) consists of 1.6 mm extrudates comprising 80 weight % xonotlite and 20% of alumina further impregnated with Pd or Pd and Ag. In another embodiment the xonotlite is first impregnated with Pd or Pd and Ag and further extruded with alumina in weight proportions of xonotlite / Alumina of 80/20.

The catalyst of the present invention is a heterogeneous catalyst which may be used in a batch wise or continuous process. Preferably, the catalyst is used in a fixed bed reactor.

**The present invention also provides an hydrogenation catalyst comprising :**

- a first constituent of at least one metal or metal-based component selected from the elements consisting of Groups 1-10 of the Periodic Table of Elements (new IUPAC notation) and a second constituent of at least one metal or metal-based component selected from the elements consisting of Groups 11-14 of the Periodic Table of Elements, and
- said first constituent and second constituent are on a carrier made essentially of a crystalline silicate.

**The present invention further provides an hydrogenation catalyst comprising :**

- a first constituent of at least one metal or metal-based component selected from the elements consisting of Groups 1-10 of the Periodic Table of Elements (new IUPAC notation) and optionally a second constituent of at least one metal or metal-based component selected from the elements consisting of Groups 11-14 of the Periodic Table of Elements, and
- said first constituent and optional second constituent are on a carrier made essentially of SiC.

All the details cited above relating to the process, the carriers, the metals or metal-based components, making of the catalysts, optional binder are available for these above two § relating to the catalysts as products.

[Examples]

Definitions:

$$\text{C}_2\text{H}_2 \text{ Conversion:} \quad \frac{(C2H2)in - (C2H2)out}{(C2H2)in} \times 100$$

$\text{C}_2\text{H}_4$ Gain Selectivity:

$$\frac{(C2H2)in - (C2H2)out - (C2H6)produced - (2 \times C4 + 3 \times C6 + 4 \times C8)produced}{(C2H2)in - (C2H2)out} \times 100$$

$\text{C}_2\text{H}_6$ Selectivity:

$$\frac{(C2H6)produced}{(C2H2)in - (C2H2)out} \times 100$$

Estimated Green-Oil Selectivity by measurement on C4 to C8 :

$$\frac{(2 \times C4 + 3 \times C6 + 4 \times C8)produced}{(C2H2)in - (C2H2)out} \times 100$$

where:

$(C_2H_2)_{in}$=Concentration of $C_2H_2$ in inlet feed, in mol %
$(C_2H_2)_{out}$=Concentration of $C_2H_2$ in outlet stream, in mol %
$(C_2H_6)_{produced}$=Difference in concentration of $C_2H_6$ between inlet feed and outlet stream, in mol %
$(C_4+C_6+C_8)_{produced}$=Difference in concentration of $C_4$ ,$C_6$ and $C_8$ between inlet feed and outlet stream, in mol %.
Similar definitions can be used for MAPD and BD conversions and selectivities.

**Preparation of the catalyst:**

The SiC (2 and 4 mm extrudates) are supplied by the company Sicat.
Xonotlite Promaxon B (powder), supplied by Promat n.v.
Alumina supplied by Condea.

MONOMETALLIC CATALYST on SiC CARRIER :

The SiC carrier is calcinated at 500°C during 3 hours, 255.21 g are obtained. It has been previously measured that said carrier can absorb 34.86 w% of water, which means 255.21x34.86 /100 = 88.97g.
0.385g of Pd(NO3)2.2H2O (containing 40 w% of Pd) are prepared, mixed with 88.97g of water and poured slowly on the carrier. Then there is a mixing by rolls and a drying step at 110°C during 16h (60°C/h) in a drying oven and finally a calcination at 400°C during 3 h (60°C/h). There is no binder.

MONOMETALLIC CATALYST on XONOTLITE/ALUMINA CARRIER

extrusion :

150 g of xonotlite and 37.5g of alumina are mixed to get a mixture comprising 80%w of xonotlite and 20% of alumina. Water is poured on said mixture while crushing until a homogeneous paste is obtained. 270ml of demineralized water were used. Then the paste is extruded and dried at 110°C during 16h (60°C/h) in a drying oven and finally calcinated at 600°C during 10 h (60°C/h). The size of the extrudates is 1.6 mm.

impregnation of the xonotlite/alumina:

The xonotlite/alumina extrudates are calcinated at 500°C during hours, 118.9g are obtained. It has been previously measured that said carrier can absorb 126.8 w% of water, which means 118.9 x 126.8/100 = 150.76g 0.1785g g of Pd(NO3)2.2H2O (containing 40 w% of Pd) are prepared, mixed with 150.76g of water and poured slowly on the xonotlite/alumina extrudates. Then there is a mixing step by rolls and a drying step at 110°C during 16h (60°C/h) in a drying oven. The final step is a calcination at 400°C during 3 h (60°C/h). The Pd content of the catalyst is 0.06%.

BIMETALLIC CATALYST on SiC CARRIER :

The SiC carrier is calcinated at 500°C during 3 hours, 264.74g are obtained. It has been previously measured that said carrier can absorb 34.86 w% of water, which means 264.74g x 34.86 /100 = 92.29 g. 0.199 g of Pd(NO3)2.2H2O (containing 40 w% of Pd) are prepared. 0.753 g of Ag NO3 (containing 63.4w% of Ag) are prepared. Then said Pd and Ag salts are mixed with 92.29 g of water and poured slowly on the carrier. Then there is a mixing step by rolls and a drying step at 110°C during 16h (60°C/h) in a drying oven. The final step is a calcination at 400°C during 3 h (60°C/h). The Pd content of the catalyst is 0.03%. The Ag content of the catalyst is 0.18w%.

BIMETALLIC CATALYST on XONOTLITEIALUMINA CARRIER

It is made similarly to the monometallic but a silver solution is added simultaneously to the Pd solution.

**Test procedure for the catalysts:**

The target is to perform at 65% conversion of acetylene on the first reaction zone, for long-term duration such as 150-200 hours. For this, only T inlet is adjusted during the test, i.e. T inlet is increased step-by-step until 65% conversion, then increased when necessary to compensate catalyst deactivation until the end of run.

Feed composition :

1.4% mol acetylene, 18.3% mol CH4, ethane traces (250 ppm), ethylene as main component, the total being 100%. This means about 80% of ethylene. There is no CO in the feed.

Test conditions

100 ml of catalyst (1.6 mm extrudates) are filled in the reactor by using interstitial loading with inert particles of 0.2mm SiC.

| T inlet: | 25°C | (adjusted during the test) |
|---|---|---|
| Molar Ratio | $H_2/C_2H_2$: 1.0 | (constant during the test) |
| GHSV: | 4000 $h^{-1}$ | (constant during the test) |

Hydrogen was added from a separate bottle (99.9% purity). The results are on table 1.

Table 1

| Catalyst type | Formulation | C2H2 conversion % | C2H4 selectivity % | estimated GO selectivity from C4 to C8 % |
|---|---|---|---|---|
| Monometallic | Commercial catalyst LT279 from Axens containing about 0.05w% Pd on alumina | 65 | 25 | 30 |
| | Catalyst according to the invention Pd (0.06%w)/ (xonotlite 80%w+alumina 20%w) | 65 | 35 | 25 |
| | Catalyst according to the invention Pd (0.06%w)/ SiC | 65 | 30 | 25 |
| | | | | |

| Catalyst type | Formulation | C2H2 conversion, % | C2H4 selectivity, % | estimated GO selectivity from C4 to C8% |
|---|---|---|---|---|
| Bimetallic | Commercial catalyst G-58C from Sud Chemie containing about 0.03w%Pd+0.2-0.18%Ag on alumina | 65 | 54 | 19 |
| | Catalyst according to the invention (Pd (0.03%w) + Ag (0.18%w)) / SiC | 65 | 52 | 8 |
| | Catalyst according to the invention (Pd (0.03%w) + Ag (0.18%w)) / (xonotlite+alumina (80-20 w%)) | 65 | 55 | 8 |
| | | | | |

## Claims

1. Selective hydrogenation process comprising:

• contacting in the presence of hydrogen an hydrocarbon feedstock comprising at least one unsaturated compound selected from the group consisting of alkynes and dienes and mixtures thereof with a first hydrogenation catalyst in a first reaction zone to produce a first product stream having a reduced proportion of alkynes and/or dienes ; and
• contacting the first product stream in a second reaction zone having an inlet and an outlet, in the presence of optional additional hydrogen, with a second hydrogenation catalyst to produce a second product stream,

wherein, the first hydrogenation catalyst comprises :

• a first constituent of at least one metal or metal-based component selected from the elements consisting of Groups 1-10 of the Periodic Table of Elements (new IUPAC notation) and optionally a second constituent of at least one metal or metal-based component selected from the elements consisting of Groups 11-14 of the Periodic Table of Elements, and

• said first constituent and optional second constituent are on a carrier made essentially of SiC or of a crystalline silicate.

2. Process according to claim 1 wherein in the second reaction zone the contact of the first product stream in the presence of optional additional hydrogen, with the second hydrogenation catalyst is made at conditions effective to produce a second product stream essentially free of the said alkynes and dienes.

3. Process according to any one of the preceding claims wherein The molar ratio of hydrogen to the at least one component having unsaturations to be selectively hydrogenated is from 0.1 to 1000.

4. Process according to any one of the preceding claims wherein the hydrocarbon feedstock is predominantly ethylene or propylene or butylene and the unsaturated compound is selected from the group consisting of acetylene, methyl acetylene, propadiene, 1,2-butadiene, 1,3-butadiene, dimethyl acetylene, ethyl acetylene, vinylacetylene and mixtures thereof.

5. Process according to any one of claims 1 to 3 wherein the hydrocarbon feedstock is an ethylene rich stream comprising acetylene and the catalyst in the first reaction zone converts at least 50% of said acetylene.

6. Process according to any one of claims 1 to 3 wherein the hydrocarbon feedstock contains about 2% (mole %) acetylene, about 70% ethylene, and the balance mostly ethane.

7. Process according to any one of claims 1 to 3 wherein the hydrocarbon feedstock contains at least 80% (mole %) propylene, less than 10% methyl acetylene and propadiene, and the balance mostly propane.

8. Process according to any one of claims 1 to 3 wherein the hydrocarbon feedstock contains at least 90% (mole %) butylene, greater than 0.2% butadiene, and the balance mostly butanes.

9. Process according to any one of the preceding claims wherein the first constituent of at least one metal or metal-based component is selected in the group consisting of Pd, Pt, Ni, Rh, Fe, Co and Ir, preferably Pd.

10. Process according to any one of the preceding claims wherein the second constituent of at least one metal or metal-based component is selected from the group consisting of Ag, Zn, Au, Ga and Ge, preferably Ag.

11. Process according to any one of the preceding claims wherein in the first hydrogenation catalyst the first constituent is Pd and the second constituent is Ag.

12. Hydrogenation catalyst comprising :

• a first constituent of at least one metal or metal-based component selected from the elements consisting of Groups 1-10 of the Periodic Table of Elements (new IUPAC notation) and a second constituent of at least one metal or metal-based component selected from the elements consisting of Groups 11-14 of the Periodic Table of Elements, and
• said first constituent and second constituent are on a carrier made essentially of a crystalline silicate.

13. Hydrogenation catalyst comprising :

• a first constituent of at least one metal or metal-based component selected from the elements consisting of Groups 1-10 of the Periodic Table of Elements (new IUPAC notation) and optionally a second constituent of at least one metal or metal-based component selected from the elements consisting of Groups 11-14 of the Periodic Table of Elements, and
• said first constituent and optional second constituent are on a carrier made essentially of SiC.

Europäisches
Patentamt

European
Patent Office

Office européen
des brevets

## PARTIAL EUROPEAN SEARCH REPORT

**Application Number**

which under Rule 63 of the European Patent Convention EP 08 17 2302
shall be considered, for the purposes of subsequent
proceedings, as the European search report

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 277 826 A (ATOFINA RES [BE]) 22 January 2003 (2003-01-22) 33-49, 48-51 ----- | 1-12 | INV. B01J23/44 B01J23/66 B01J27/224 B01J37/02 |
| X | WO 01/41922 A (BASF AG [DE]; FRENZEL ANDREA [DE]; HESSE MICHAEL [DE]; ANSMANN ANDREAS) 14 June 2001 (2001-06-14) claims 1-4, 10; p. 10, l. 13-p.12, l. 25 ----- | 1-12 | |
| X,D | WO 2006/078926 A (SUED CHEMIE INC [US]; ROKICKI ANDRZEJ [US]; LINKE DAVID; BLANKENSHIP S) 27 July 2006 (2006-07-27) claims 1-21;   10-15 ----- | 1-12 | |
| D,X | US 2006/153765 A1 (PHAM-HUU CUONG [FR] ET AL) 13 July 2006 (2006-07-13) example 2 ----- | 12 | |
| X,D | US 2005/159292 A1 (PHAM CHARLOTTE [FR] ET AL) 21 July 2005 (2005-07-21) claims 91 and 100 ----- | 12 | |
| | -/-- | | |

TECHNICAL FIELDS
SEARCHED      (IPC)

B01J

## INCOMPLETE SEARCH

The Search Division considers that the present application, or one or more of its claims, does/do
not comply with the EPC to such an extent that a meaningful search into the state of the art cannot
be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| Munich | 16 June 2009 | de Cauwer, Robby |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04E07)

Europäisches
Patentamt

European
Patent Office

Office européen
des brevets

**PARTIAL EUROPEAN SEARCH REPORT**

Application Number

EP 08 17 2302

| | DOCUMENTS CONSIDERED TO BE RELEVANT | | CLASSIFICATION OF THE APPLICATION (IPC) |
|---|---|---|---|
| Category | Citation of document with indication, where appropriate, of relevant passages | Relevant to claim | |
| A | US 6 187 176 B1 (HANTZER SYLVAIN [US] ET AL) 13 February 2001 (2001-02-13) * the whole document * ----- | | |
| A | WO 02/088102 A (UNION CARBIDE CHEM PLASTIC [US]) 7 November 2002 (2002-11-07) * the whole document * ----- | | |
| | | | **TECHNICAL FIELDS SEARCHED** (IPC) |

EPO FORM 1503 03.82 (P04C10)

Europäisches
Patentamt

European
Patent Office

Office européen
des brevets

**INCOMPLETE SEARCH
SHEET C**

Application Number

EP 08 17 2302

Claim(s) searched completely:
        -

Claim(s) searched incompletely:
        1-12

Claim(s) not searched:
        -

Reason for the limitation of the search:

The present claims relate to an extremely large number of possible
compounds/methods. Support and disclosure in the sense of Article 84 and
83 EPC is to be found however for only a very small proportion of the
compounds/methods claimed, see p. 25-29. The non-compliance with the
substantive provisions is to such an extent, that a meaningful search of
the whole claimed subject-matter of the claim could not be carried out
(Rule 63 EPC and Guidelines B-VIII, 3). The extent of the search was
consequently limited.
There also does not seem to be support for the integration of a second
hydrogenation zone/catalyst, since no embodiments containing said second
part are disclosed.

The search of the claims 1-13 was restricted to those claimed
compounds/methods which appear to be supported and a generalisation of
their exemplary character as defined in claim 9 in combination with claim
10 in as far as they relate to the "first" catalyst.

## ANNEX TO THE EUROPEAN SEARCH REPORT
## ON EUROPEAN PATENT APPLICATION NO.

EP 08 17 2302

This annex lists the patent family members relating to the patent documents cited in the above-mentioned European search report.
The members are as contained in the European Patent Office EDP file on
The European Patent Office is in no way liable for these particulars which are merely given for the purpose of information.

16-06-2009

| Patent document cited in search report | | Publication date | Patent family member(s) | | Publication date |
|---|---|---|---|---|---|
| EP 1277826 | A | 22-01-2003 | CN | 1549851 A | 24-11-2004 |
| | | | WO | 03008519 A1 | 30-01-2003 |
| | | | JP | 2004535470 T | 25-11-2004 |
| | | | US | 2004232049 A1 | 25-11-2004 |
| | | | US | 2008257784 A1 | 23-10-2008 |
| WO 0141922 | A | 14-06-2001 | AT | 333935 T | 15-08-2006 |
| | | | AU | 3006701 A | 18-06-2001 |
| | | | BR | 0016240 A | 27-08-2002 |
| | | | CA | 2393984 A1 | 14-06-2001 |
| | | | CN | 1409655 A | 09-04-2003 |
| | | | DE | 19959064 A1 | 13-06-2001 |
| | | | EP | 1242181 A1 | 25-09-2002 |
| | | | ES | 2269224 T3 | 01-04-2007 |
| | | | JP | 2003516225 T | 13-05-2003 |
| | | | RU | 2290258 C2 | 27-12-2006 |
| | | | TW | 243709 B | 21-11-2005 |
| | | | US | 2003023121 A1 | 30-01-2003 |
| | | | US | 2007142683 A1 | 21-06-2007 |
| WO 2006078926 | A | 27-07-2006 | CN | 101146614 A | 19-03-2008 |
| | | | EP | 1899053 A1 | 19-03-2008 |
| US 2006153765 | A1 | 13-07-2006 | AU | 2003271797 A1 | 02-02-2004 |
| | | | CA | 2491756 A1 | 22-01-2004 |
| | | | EP | 1519789 A1 | 06-04-2005 |
| | | | FR | 2842125 A1 | 16-01-2004 |
| | | | WO | 2004007074 A1 | 22-01-2004 |
| US 2005159292 | A1 | 21-07-2005 | AT | 422491 T | 15-02-2009 |
| | | | EP | 1694946 A1 | 30-08-2006 |
| | | | FR | 2860993 A1 | 22-04-2005 |
| | | | WO | 2005038204 A1 | 28-04-2005 |
| US 6187176 | B1 | 13-02-2001 | NONE | | |
| WO 02088102 | A | 07-11-2002 | AR | 033294 A1 | 10-12-2003 |
| | | | BR | 0209318 A | 20-07-2004 |
| | | | CA | 2442094 A1 | 07-11-2002 |
| | | | CN | 1507438 A | 23-06-2004 |
| | | | EP | 1387834 A1 | 11-02-2004 |
| | | | HK | 1066802 A1 | 03-08-2007 |
| | | | JP | 2004531542 T | 14-10-2004 |
| | | | MX | PA03010008 A | 30-06-2004 |
| | | | TW | 283661 B | 11-07-2007 |
| | | | US | 6765101 B1 | 20-07-2004 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7038097 B
- US 7256153 B
- WO 2006023142 A
- WO 2006009988 A
- WO 20060789 A
- US 2002068843 A
- WO 03008519 A
- US 2005159292 A
- US 2006153765 A
- US 200159292 B

- EP 0313480 A
- EP 0440569 A
- EP 0511919 A
- EP 0543751 A
- EP 543752 A
- US 7393877 B
- US 5217930 A
- EP 0543752 A
- US 6217841 B